# EUROPÄISCHE PATENTSCHRIFT

(11) **EP 0 944 943 B1**
(45) Veröffentlichungstag und Bekanntmachung des Hinweises auf die Patenterteilung: **21.03.2001**
(21) Anmeldenummer: 97954701.5
(22) Anmeldetag: 12.12.1997
(51) Int. Cl.: H02B 13/035

(54) **ELEKTRISCHE KUPPLUNGSEINRICHTUNG ZWISCHEN SCHALTRÄUMEN**
DEVICE FOR ELECTRICAL CONNECTIONS BETWEEN SWITCH ROOMS
DISPOSITIF D'ACCOUPLEMENT ELECTRIQUE ENTRE DES ZONES DE COMMUTATION

(30) Priorität: 16.12.1996 DE 19653676
(43) Veröffentlichungstag der Anmeldung: 29.09.1999
(73) Patentinhaber: SIEMENS AKTIENGESELLSCHAFT, 80333 München (DE)
(72) Erfinder: POTH, Rainer, D-61118 Bad Vilbel (DE)
(86) Internationale Anmeldenummer: DE9702937
(87) Internationale Veröffentlichungsnummer: WO9827618

(56) Entgegenhaltungen:
- EP-A- 0 199 249
- EP-A- 0 199 891
- EP-A- 0 520 933
- DE-U- 8 512 168

## Beschreibung

Die Erfindung betrifft eine elektrische Kupplungseinrichtung zur Verbindung von auftrennbaren Verbindungsleitungen zwischen mindestens zwei Schalträumen, insbesondere für Mittels-pannungs-Schaltanlagen, wobei die Verbindungsleitungen durch Behälterwände durchgeführt und von einem rotationsymmetrischen Isolierkörper umgeben sind, die von einer beiden gemeinsamen Isolierstoffmanschette umfaßt sind, und deren Verbindungsleitungen durch eine Kontaktvorrichtung elektrisch leitend verbunden sind.

Eine derart definierte elektrische Kupplungseinrichtung ist durch die EP 0 199 249 B1 bekannt. Dort sind zwei elektrische Leiter jeweils von rotationssymmetrischen Isolierkörpern umgeben, die im Bereich der freien Leiterenden mit Abstand einander gegenüberstehen und deren Isolierkörper eine zentrische Vertiefung aufweisen. Der durch den Abstand der Isolierkörper und durch deren zentrische Vertiefung gebildete Hohlraum wird durch eine an die Außenkontur des Isolierkörpers angepaßte Manschette gebildet, wobei der Hohlraum in seinem Mittenbereich durch eine Wulst der Manschette abgeschlossen ist.
In dem Hohlraum befindet sich eine Kontaktvorrichtung, die die beiden Leiterenden mit einer wellenförmigen Querschnitts-kontur umschließt. Die Kontaktvorrichtung ist an jedem Ende durch eine ringförmige Feder mit einer radialwirkenden Kraftkomponente an die Leiterenden angedrückt. Durch den vorhandenen Hohlraum, der durch die umlaufende Wulst noch vergrößert wird, ist die Kontakteinrichtung in der Lage, Fluchtabweichungen der Leiterenden in gewissen Grenzen auszugleichen. Die der Erfindung zugrundeliegende Aufgabe besteht darin, unter Beibehaltung des Ausgleichs von Fluchtabweichungen der Leiterenden zueinander eine Kupplungseinrichtung zwischen den Leitern zu definieren, die gegenüber den bekannten Einrichtungen mit erheblich einfacheren konstruktiven Mitteln zu realisieren ist und bei der insbesondere der Fluchtabgleich in möglichst weiten Grenzen ohne Beeinträchtigung der Kontaktgabe und ohne Veränderung von konstruktiven Mitteln gewährleistet ist. Darüber hinaus soll die Kontaktgabe zwischen den Leitern und auch die Beanspruchung durch die elektrischen Felder innerhalb des Isoliermediums zusätzlich verbessert sein. Erfindungsgemäß wird dies durch die Merkmale
- 1.1: die aus den Schalträumen hinausragenden freien Enden der Verbindungsleitungen sind durch einen ersten und durch einen zweiten Durchführungsbolzen realisiert, die an den stirnförmig zugewandten Seiten eine mit einem Multikontakt versehenen ringförmigen Hohlkörper zur Aufnahme eines Kontaktbolzens aufweisen,
- 1.2: der Kontaktbolzen ist einstückig und im Bereich der Multikontakte kugelförmig gestaltet,
- 1.3: die Isolierstoffmanschette ist durch eine aus Silikonkautschuk bestehende Hülse gebildet, die im Längsmitten-bereich des Kontaktbolzens bogenförmig ausgestaltet ist,
- 1.4: die Hülse ist im bogenförmigen Teil bis zum jeweils angrenzenden Durchführungsbolzen mit einer Potential-Leitschicht versehen und bildet mit dem Kontaktbolzen eine ringförmige Potential-Kontaktstelle,
- 1.5: die Hülse ist im Bereich der Gehäuse durch eine Anpreßhülse lagefixiert,
- 1.6: die Hülse weist im nach außen gerichteten Umfangsbereich eine Erdpotential-Leitschicht auf, die die Behälterwände leitend verbinden, erreicht.

Mit dem zwischen den beiden Durchführungsbolzen vorgesehenen Kontaktbolzen als einstückiges Kompaktbauteil, das an den freien Enden kugelförmig ausgestaltet ist und in den entsprechend ringförmigen Hohlkörpern der Durchführungsbolzen gelagert ist, ist eine Kupplungseinrichtung geschaffen, die optimale Bedingungen für den Toleranzausgleich zwischen den Leitern schafft. So können beispielsweise beide mit den jeweiligen Durchführungsbolzen verbundene Leiter im zulässigen Grenzbereich in beliebigen Winkeln zueinander zusammengeführt werden, ohne daß zusätzliche Anpassungen der elektrischen Kupplungseinrichtungen vorgesehen sind. Gleichzeitig sind mit dieser elektrischen Kupplungseinrichtung auch laterale Abweichungen, d. h. Abeichungen von der idealisierten Mittelachse der jeweiligen Durchführungsbolzen, in einfacher Weise ausgeglichen.
Durch die relativ großen Anlageflächen zwischen den Endbereichen der jeweiligen Durchführungsbolzen und den an seinen Enden kugelförmig ausgebildeten Kontaktbolzen lassen sich auch Längentoleranzen zwischen den Schalträumen ohne Schwierigkeiten ausgleichen.
Als besonders vorteilhaft für die Erfindung ist in diesem Zusammenhang außerdem anzusehen, daß die Hülse mit der Potential-Leitschicht im bogenförmigen Bereich unabhängig von den vorherrschenden Abweichungen in angularer, lateraler und/oder axialer Richtung stets eine elektrisch leitende Verbindung mit der ringförmigen Potential-Kontaktstelle des Kontaktbolzens bildet. Durch diese Maßnahme bestehen neben der Kontakt-gabe zwischen den Durchführungsbolzen im Bereich des Multi-kontakts immer ein weiterer Kontaktbereich, der erheblich zur Steigerung der Sicherheit der Kontaktgabe zwischen den Leitern insgesamt beiträgt.

Eine vorteilhafte Ausgestaltung der Erfindung sieht in diesem Zusammenhang außerdem vor, daß
- 2.1: die Anpreßhülsen durch eine Druckfeder kraftschlüssig zwischen den Behälterwänden positioniert sind.
Durch diese Maßnahme ergibt sich eine sehr stabile Verbindung zwischen den Schalträumen, ungeachtet der toleranzbedingten Fluchtabweichungen.

Eine weitere vorteilhafte Ausgestaltung der Erfindung sieht die Ansprüche
- 3.1: die Hülse steht im Bereich der freien Enden des bogenförmigen Teils mit einer ringförmig ausgebildeten ersten und zweiten Feldsteuerelektrode-Potential in Verbindung,
- 3.2: die erste und die zweite Feldsteuerelektrode-Potential sind mit der Potential-Leitschicht der Hülse elektrisch leitend verbunden, vor.
Damit ist der Grenzbereich zwischen dem Außenumfang des Gehäuses und der aus Silikonkautschuk gebildeten Hülse mit seiner sogenannten Edelfuge in besonderer Weise gegen die schädlichen Einflüsse der sich bildenden elektrischen Felder geschützt.

Die Erfindung wird durch ein figürlich dargestellte Ausführungsbeispiel in zwei Figuren näher erläutert, wobei die
- Figur 1: die prinzipielle Lage der elektrischen Kupplungseinrichtung zwischen den zwei Schalträumen einer Mittelspannungs-Schaltanlage erkennen läßt und die
- Figur 2: nähere Einzelheiten der elektrischen Kupplungseinheit darstellt.

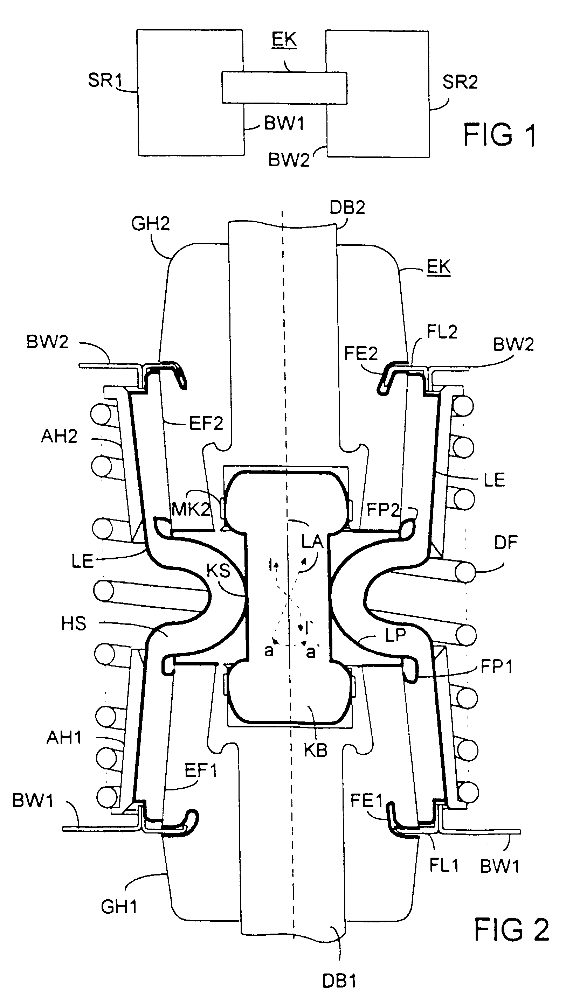

Die Figur 1 zeigt die elektrische Kupplungseinrichtung EK, die zwei Schalträume SR1, SR2 einer Mitelspannungs-Schaltanlage elektrisch miteinander verbindet. Die Schalträume SR1, SR2 der Mittelspannungs-Schaltanlage können mit Schutzgas gefüllt sein, so daß die elektrische Kupplungseinrichtungen gasdicht durch die entsprechenden Behälterwände BW1, BW2 durchgeführt sind.

Die Figur 2 läßt nähere Einzelheiten der elektrischen Kupplungseinrichtung EK erkennen, bei der im wesentlichen die beiden Durchführungsbolzen DB1, DB2 in Verbindung mit dem Kontaktbolzen KB die elektrisch leitende Verbindung zwischen den durch die entsprechenden Behälterwände BW1, BW2 durchgeführten Durchführungsbolzen DB1, DB2 herstellen. Weiterhin ist ersichtlich, daß die Durchführungsbolzen DB1, DB2 jeweils von dem entsprechenden Gehäuse GH1, GH2 umgeben sind, wobei die Gehäuse GH1, GH2 beispielsweise aus Gießharz hergestellt sein können. Die Gehäuse GH1, GH2 weisen eine ringförmig umlaufende Ausnehmung auf, die als Feldsteuerelektrode-Erdpotential FE1, FE2 auf Erdpotential geschaltet ist. Innerhalb der Feldsteuerelektrode-Erdpotential FE1, FE2 sind die Flansche FL1, FL2 eingeschweißt, die mit der jeweiligen Behälterwand BW1, BW2 des entsprechenden Schalterraumes SR1, SR2 (Figur 1) gegebenenfalls gasdicht verbunden sind.

Desweiteren ist erkennbar, daß der Kontaktbolzen KB als einstückiges Bauelement an seinen Enden kugelförmige Bereiche enthält, die in den entsprechenden Ausnehmungen der Durchführungsbolzen DB1, DB2 gelagert sind. Als Kontaktübergang ist innerhalb der Ausnehmungen der Durchführungsbolzen DB1, DB2 ein ringförmiger sogenannter Multikontakt MK1, MK2 vorgesehen, der die Kontaktgabe zwischen den Durchführungsbolzen DB1, DB2 und den Kontaktbolzen KB auch bei einander nicht fluchtenden Durchführungsbolzen DB1, DB2 garantiert. Weiterhin ist ersichtlich, daß die Gehäuse GH1, GH2 in ihrem nach innen weisenden Konusbereich von der Hülse HS umschlossen sind, die im Mittenbereich des Kontaktbolzens KB eine ringförmige Verjüngung aufweist. Die ringförmige Verjüngung bildet gleichzeitig die Potentialkontaktstelle KS, so daß das Potential sowohl zwischen den Endbereichen der Durchführungsbolzen DB1, DB2 als auch über die Feldsteuerelektrode-Potential FP1, FP2 direkt übertragbar ist. Durch die am Kontaktbolzen KB sich ergebene Potentialkontaktstelle KS sind unabhängig von möglichen Toleranzverschiebungen der Durchführungsbolzen DB1, DB2 untereinander stets zwei voneinander unabhängige Kontaktbereiche gebildet, die die elektrische Verbindung zwischen den Durchführungsbolzen DB1, DB2 sicherstellen.

In Figur 2 ist außerdem dargestellt, daß die Längsmittenachse LA, und damit die Durchführungsbolzen DB1, DB2 zueinander im Winkelbereich a, a' und auch im Längentoleranzbereich 1, 1' voneinander abweichen können, ohne daß die Kontaktgabe zwischen den Durchführungsbolzen DB1, DB2 beeinträchtigt ist. Außerdem ist ersichtlich, daß auch die Längsmittenachsen LA der Durchführungsbolzen DB1, DB2 in Fluchtrichtung gegeneinander parallel verschoben sein können. Auch in diesem Fall stellt sich die elektrische Kupplungseinrichtung automatisch so ein, daß die elektrische Verbindung zwischen den Durchführungsbolzen DB1, DB2 fehlerfrei aufrechterhalten ist.

Zwischen dem Gehäuse GH1, GH2 und der beiden Gehäusen GH1, GH2 gemeinsamen Hülse HS ist die sogenannte Edelfuge EF1, EF2 gebildet, die durch die Feldsteuerelektrode-Potential FP1, FP2 sowie durch den mit der Potential-Leitschicht LP verbundenen Innenbereich der Hülse HS in besonderer Weise gegen elektrische Felder und damit gegen Überschlag auf die benachbarten Bereiche, beispielsweise der Behälterwände BW1, BW2, geschützt ist.
Der Außenbereich der Hülse HS ist mit der Erdpotential-Leitschicht LE versehen und stellt die Erdpotential-Verbindung zwischen den Behälterwänden BW1, BW2 dar.

Die den beiden Gehäusen GH1, GH2 gemeinsame Hülse HS ist mittels der Anpreßhülsen AH1, AH2 im Bereich der jeweiligen Edelfuge EF1, EF2 auf das entsprechende Gehäuse GH1, GH2 auf-gepreßt. Weiterhin ist ersichtlich, daß zwischen den beiden Behälterwänden BW1, BW2 eine Druckfeder DF die jeweiligen Anpreßhülsen AH1, AH2 gegen die Behälterwände BW1, BW2 drückt und somit für die Kontaktgabe eine stabilisierte Lage der elektrischen Kupplungseinrichtung EK zwischen den Behälterwänden BW1, BW2 gewährleistet.

## Patentansprüche

1. Elektrische Kupplungseinrichtung zur Verbindung von auftrennbaren Verbindungsleitungen zwischen mindestens zwei Schalträumen(SR1, SR2), insbesondere für Mittelspannungsschaltanlagen, wobei die Verbindungsleitungen durch Behälterwande (BW1, BW2) durchge-führt und von einem rotationsymmetrischen Isolierkörper umgeben sind, die von einer beiden gemeinsamen Isolierstoffmanschette umfaßt sind, und deren Verbindungsleitungen durch eine Kontaktvorrichtung elektrisch leitend verbunden sind, **gekennzeichnet durch** die Merkmale
1.1 die aus den Schalträumen (SR 1,2) hinausragenden freien Enden der Verbindungsleitungen sind durch einen ersten und durch einen zweiten Durchführungsbolzen (DB1, 2) realisiert, die an den stirnförmig zugewandten Seiten eine mit einem Multikontakt (MK) versehenen ringförmigen Hohlkörper zur Aufnahme eines Kontaktbolzens (KB) aufweisen,
1.2 der Kontaktbolzen (KB) ist einstückig und im Bereich der Multikontakte (MK) kugelförmig gestaltet,
1.3 die Isolierstoffmanschette ist durch eine aus Silikonkautschuk bestehende Hülse (HS) gebildet, die im Längs-mittenbereich des Kontaktbolzens (KB) bogenförmig ausgestaltet ist,
1.4 die Hülse (HS) ist im bogenförmigen Teil bis zum jeweils angrenzenden Durchführungsbolzen (DB1, 2) mit einer Potential-Leitschicht (LP) versehen und bildet mit dem Kontaktbolzen (KB) eine ringförmige Potential-Kontaktstelle (KS),
1.5 die Hülse (HS) ist im Bereich der Gehäuse (GH1, 2) durch eine Anpreßhülse (AH1, 2) lagefixiert,
1.6 die Hülse (HS) weist im nach außen gerichteten Umfangsbereich eine Erdpotential-Leitschicht (LE) auf, die die Behälterwände (BW1, 2) leitend verbinden.

2. Elektrische Kupplungseinrichtung zur Verbindung von auftrennbaren Verbindungsleitungen zwischen mindestens zwei Schalträumen nach Anspruch 1,
**gekennzeichnet durch** das Merkmal
2.1 die Anpreßhülsen (AH1, 2) sind durch eine Druckfeder (DF) kraftschlüssig zwischen den Behälterwänden (BW1, 2) positioniert.

3. Elektrische Kupplungseinrichtung zur Verbindung von auftrennbaren Verbindungsleitungen zwischen mindestens zwei Schalträumen nach Anspruch 1 und den Ansprüchen 1 und 2, **gekennzeichnet durch** die Merkmale
3.1 die Hülse (HS) steht im Bereich der freien Enden des bogenförmigen Teils mit einer ringförmig ausgebildeten ersten und zweiten Feldsteuerelektrode-Potential (FP1, 2) in Verbindung,
3.2 die erste und die zweite Feldsteuerelektrode-Potential sind mit der Potential-Leitschicht (LP) der Hülse (HS) elektrisch leitend verbunden.

## Claims

1. Electrical coupling device for connecting separable connecting lines between at least two switchrooms (SR1, SR2), in particular for medium-voltage switchgear, wherein the connecting lines are led through container walls (BW1, BW2) and are surrounded by a rotationally symmetrical insulating body, being enclosed by an insulating sleeve common to both, and the connecting lines of which are electrically conductively connected by a contact assembly, characterised by the features
1.1 the free ends of the connecting lines, which free ends project from the switchrooms (SR 1,2), are realised by a first and by a second bushing conductor stud (DB1, 2), which bushing conductor studs have, on the facing sides forming an end face, an annular hollow body, provided with a multi-contact (MK), for receiving a contact stud (KB),
1.2 the contact stud (KB) is in one piece and is shaped spherically in the region of the multi-contacts (MK),
1.3 the insulating sleeve is formed by a sheath (HS) which consists of silicone rubber, and is shaped such that it is bow-shaped in the longitudinal-centre region of the contact stud (KB),
1.4 in the bow-shaped portion up to the respectively adjacent bushing conductor stud (DB1, 2), the sheath (HS) is provided with a potential conducting layer (LP) and forms with the contact stud (KB) an annular potential contact point (KS),
1.5 in the region of the housing (GH1, 2), the sheath (HS) is position-fixed by a clamping sheath (AH1, 2),
1.6 in the outwardly-directed circumferential region, the sheath (HS) has an earth-potential conducting layer (LE), which the container walls (BW1, 2) conductively connect.

2. Electrical coupling device for connecting separable connecting lines between at least two switchrooms according to claim 1, characterised by the feature
2.1 the clamping sheaths (AH1, 2) are positioned by a compression spring (DF) in a force-locking manner between the container walls (BW1, 2).

3. Electrical coupling device for connecting separable connecting lines between at least two switchrooms according to claim 1 and claims 1 and 2, characterised by the features
3.1 in the region of the free ends of the bow-shaped portion, the sheath (HS) is connected to an annularly constructed first and second field control electrode potential (FP1, 2),
3.2 the first and the second field control electrode potentials are electrically conductively connected to the potential conducting layer (LP) of the sheath (HS).

## Revendications

1. Dispositif d'accouplement électrique pour relier des lignes de liaison séparables entre au moins deux chambres (SR1, SR2) de coupure, notamment pour des installations de coupure à moyenne tension, les lignes de liaison passant à travers des parois (BW1, BW2) de boîtiers et étant entourées d'un corps isolant symétrique de révolution, les deux chambres de coupure étant entourées d'un manchon en matériau isolant commun aux deux chambres et leurs lignes de liaison étant reliées de manière conductrice de l'électricité par un dispositif de contact, caractérisé par les dispositions
1.1 les extrémités libres des lignes de liaison faisant saillie des chambres (SR1, SR2) de coupure sont réalisées par une première tige (DB1 ) et une deuxième tige (DB2) de traversée qui comportent sur les faces tournées vers l'avant un élément creux annulaire, muni d'un multicontact (MK), pour la réception d'une touche (KB) de contact,
1.2 la tige (KB) de contact est d'un seul tenant et conformée de manière sphérique dans la zone des multicontacts (MK),
1.3 le manchon isolant est formé d'une douille (HS) en caoutchouc de silicone qui est conformée en arc dans la zone médiane longitudinale de la tige (KB) de contact,
1.4 la douille (HS) est munie dans la partie en arc chaque fois jusqu'à la tige (DB1, DB2) de traversée adjacente d'une couche (LP) conductrice de potentiel et forme avec la tige (KB) de contact un point (KS) de contact de potentiel annulaire,
1.5 la douille (HS) est immobilisée en position dans la zone des boîtiers (GH1, GH2) par une douille (AH1, AH2) d'application de pression,
1.6 la douille (HS) comporte dans la zone périphérique dirigée vers l'extérieur une couche (LE) conductrice de potentiel de terre, qui relie de manière conductrice les parois (BW1, BW2) de boîtiers.

2. Dispositif d'accouplement électrique pour relier des lignes de liaison séparables entre au moins deux chambres de coupure suivant la revendication 1, caractérisé par la disposition
2.1 les douilles (AH1, AH2) d'application de pression sont mises en place entre les parois (BW1, BW2) de boîtiers avec liaison positive par un ressort (DF) de pression.

3. Dispositif d'accouplement électrique pour relier des lignes de liaison séparables entre au moins deux chambres de coupure suivant la revendication 1 et les revendications 1 et 2, caractérisé par les dispositions
3.1 la douille (HS) est en liaison dans la zone des extrémités libres de la partie en forme d'arc avec un premier potentiel (SP1 ) et un deuxième potentiel (SP2) d'électrode de commande de champ réalisés de manière annulaire,
3.2 le premier et le deuxième potentiel d'électrode de commande de champ sont reliés de manière conductrice de l'électricité à la couche (LP) conductrice de potentiel de la douille (HS).
